# EUROPÄISCHE PATENTSCHRIFT

(11) **EP 1 644 244 B1**
(45) Veröffentlichungstag und Bekanntmachung des Hinweises auf die Patenterteilung: **21.03.2007**
(21) Anmeldenummer: 04802701.5
(22) Anmeldetag: 10.11.2004
(51) Int. Cl.: B64C 31/06, A63H 27/08

(54) **TUBEKITE**
TUBE KITE
CERF-VOLANT TUBULAIRE

(30) Priorität: 17.12.2003 DE 10359480; 20.08.2004 DE 102004040510; 01.09.2004 DE 102004042669
(43) Veröffentlichungstag der Anmeldung: 12.04.2006
(73) Patentinhaber: Boards & More AG, 1815 Clarens/Montreux (CH)
(72) Erfinder: EBERLE, Till, 82041 Oberhaching (DE); WINNER, Ken, Hood River, OR 97031 (US)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2004/002484
(87) Internationale Veröffentlichungsnummer: WO 2005/058695

(56) Entgegenhaltungen:
- DE-C1- 10 162 859
- DE-U1- 20 220 025
- DE-U1- 20 303 088
- DE-U1- 20 303 089

## Beschreibung

Die vorliegende Erfindung betrifft einen Tubekite zum Kite-Surfen nach dem Oberbegriff des Anspruchs 1.

Das Kite-Surfen erfreut sich zunehmender Beliebtheit. Neben den individuellen Fähigkeiten des Surfers kommt dabei der Geometrie des Tubekites eine wesentliche Bedeutung zu. Die Geometrie wird im wesentlichen über das Profil des Tubekites, d.h. über den Schnitt, einen aufblasbaren Schlauch "Tube" in einer Leading Edge, die Anzahl und Anordnung von aufblasbaren oder als Feststoff ausgebildeten Rippen zur Stabilisierung, und über die Anzahl und Anordnungen von zum Surfer geführten Zugleinen bestimmt.

Eine bekannte Lösung eines Tubekites ist in der DE 101 62 859 C1 offenbart. Der Tubekite hat vier Zugleinen, d.h. zwei Frontleinen und zwei Backleinen. Die Frontleinen sind im Bereich einer Bar zusammengeführt. Die Zusammenführung der Frontleinen erstreckt such durch die Bar und ist lösbar am Trapez eines Surfer befestigt. Die beiden Backleinen wirken als Steuerleinen und sind an Endabschnitten der Bar zum Steuern des Tubekites befestigt. Zum kontrollierten zum Absturz bringen des Tubekites und zur Starterleichterung ist eine Sicherungsleine vorgesehen, die zwischen den Frontleinen an einer Leading Edge angreift und ebenfalls zum Surfer geführt ist. In der Flugphase ist die Sicherungsleine entlastet.

Nachteilig an dieser Lösung ist, dass sich die Geometrie des Tubekites in der Flugphase durch zB eine einfallende Windböe oder bei Betätigung der Backleinen derart ändern kann, dass ein Performanceabfall auftritt.

Aufgabe der vorliegenden Erfindung ist es, einen Tubekite zu schaffen, der eine stabile Geometrie und eine hohe Performance aufweist.

Diese Aufgabe wird gelöst durch einen Tubekite mit den Merkmalen nach dem Anspruch 1.

Der erfindungsgemäße Tubekite hat zwei Frontleinen und zwei Backleinen. Die Frontleinen sind zu einer gemeinsamen Zugleine zusammengeführt und am Surfer lösbar befestigbar. Die beiden Backleinen dienen als Steuerleinen und sind an einer Bar befestigt. Erfindungsgemäß ist den Frontleinen eine zusätzliche Zugleine zugeordnet. Dadurch ist der Tubekite nicht nur an zwei Frontleinen sondern an drei Frontleinen aufgehängt. Durch diese zusätzliche Zugleine - im Folgenden Zusatzleine genannt - bleibt die Geometrie des Tubekites im Flugzustand stabil, d. h., der Arc des Kites bleibt erhalten.

Die Zusatzleine kann auf verschiedene Arten an dem Tubekite angreifen. So kann sie bspw. in der Mitte zwischen den beiden Frontleinen oder verzweigt über eine Vielzahl von Verzweigungsleinen an dem Tubekite angreifen. Dabei ist es vorstellbar, die Zusatzleine bzw. die Verzweigungsleinen direkt an einer Anströmkante oder zwischen der Anströmkante und einer Abströmkante zu befestigen. Ebenso kann/können die Zusatzleine/Verzweigungsleinen auch über Waagen, d.h. über sich verzweigende Anknüpfleinen an dem Tubekite, angreifen.

Die Zusatzleine kann frühestens an einem Kupplungsabschnitt der beiden Frontleinen, d.h. an der Verbindung der Frontleinen mit der Zugleine oder darunter angreifen. Prinzipiell kann die Zusatzleine auch zwischen der Bar und dem Surfer an der Zugleine befestigt sein.

Vorteilhafterweise ist die Zusammenführung der beiden Frontleinen näher zum Tubekite hin als zu der Bar angeordnet. Bei einer bevorzugten Variante liegt die Zusammenführung der Frontleinen abhängig von der Kitegröße oder der Länge des Leinensystems im Bereich zwischen 5m unter dem Kite und etwa 3m oberhalb der Bar oder eines Poweradjusters. Diese frühe Zusammenführung ist nur möglich, da die Zusatzleine aufgrund der Kraftübertragung den Kite im depowerten Zustand stabilisiert. Bei herkömmlichen Lösungen musste der Kupplungsabschnitt weiter weg vom Kite vorgesehen werden, da sonst der Kite beim Depowern seinen Arc sehr stark verändert und zum Absturz kommen kann.

Bei einer Ausführungsform hat der Kupplungsabschnitt einen Ring, an dem die Frontleinen befestigt sind und von dem sich die Zugleine zum Surfer erstreckt. In der Flugphase greift die Zusatzleine über einen Stopper an dem Ring an, so dass die auf die Zusatzleine wirkende Zugkraft ebenfalls auf die Zugleine übertragen wird. Um ein Grundtrimmen der Zusatzleine zu ermöglichen, ist der Stopper einstellbar.

Bei einer bevorzugten Ausführungsform ist die Zusatzleine über den Kupplungsabschnitt hinaus in Richtung der Bar verlängert. Durch diese Ausbildung ist es möglich, die Zusatzleine ebenfalls als Depower- bzw. Sicherheitsleine zu verwenden. Vorteilhafterweise ist die Zusatzleine zusammen mit der Zugleine durch eine Führung der Bar geführt.

Bei einer Ausführungsform ist die Zugleine an einem öffnungsbaren Halteelement an einem Trapez des Surfers befestigt. Die Zusatzleine ist vorzugsweise an einer Halterung der Zugleine oder des Halteelements sicherbar. Die Zusatzleine ist über die Halterung hinaus verlängert und lösbar am Trapez befestigt. Beim Öffnen des Halteelements ist der Tubekite nur noch über die Zusatzleine mit dem Trapez des Surfers verbunden, während zumindest die Frontleinen entlastet sind. Dadurch kann ein vollständiges Depowern des Tubekite beim Öffnen des Halteelements erfolgen. Dabei kann das Halteelements direkt oder indirekt über einen Auslösekörper geöffnet werden.

Bei einer anderen Ausführungsform wird die Zugleine über ein Entsicherungsteil, das an der Zusatzleine geführt ist, an dem öffnungsbaren Halteelement befestigt. Bei Betätigung des Entsicherungsteils öffnet dieses und die Zugleine wird entlastet, wodurch der Tubekite an dem Trapez des Surfers nur noch über die Zusatzleine hängt und folglich depowered wird. Zum vollständigen Trennen des Tubekites vom Surfer wird das Halteelement geöffnet.

Zum Trimmen der Zugleine ist ein Trimmelement vorzugsweise zwischen dem Kupplungsabschnitt und der Bar vorgesehen.

Um den Bereich der Zusatzleine zwischen dem Angriffspunkt an den Frontleinen bzw. der Zugleine und dem Surfer straff zu ziehen, kann die Zusatzleine mit einem Spannelement versehen werden, welches diese auf Spannung hält.

Dieses Spannelement kann auch durch eine Klemme gebildet sein, die im Bereich zwischen der Bar und dem Surfer fixiert ist und an der der lose Teil der Zusatzleine belegt werden kann, um diese stramm zu ziehen. Diese Klemme ist vorzugsweise so ausgebildet, dass sie beim Loslassen der Bar selbsttätig die Zugleine freigibt, so dass diese als Sicherungsleine wirken kann.

Bei einem Absturz kann es vorkommen, dass sich der Kite um 360 °dreht und sich die Zusatzleine um den Schirm wickelt. Um eine Beschädigung durch Einschneiden der Zusatzleine in den Schirm zu vermeiden, wird diese derart am Fronttube befestigt, dass sie sich bei dieser Drehung lösen kann.

Sonstige vorteilhafte Ausführungsformen sind Gegenstand weiterer Unteransprüche.

Im Folgenden werden bevorzugte Ausführungsformen der Erfindung anhand schematischer Darstellungen näher erläutert. Es zeigen
Figur 1 eine erste Ausführungsform eines erfindungsgemäße Tubekites mit einer Bar,
Figur 2 eine Vergrößerung des Bereichs X aus Figur 1,
Figur 3 eine Vergrößerung des Bereichs Y aus Figur 1,
Figur 4 eine Anordnung eines Trimmelements für eine Zugleine und eines Spannelements für eine Zusatzleine bei dem Tubekite nach Figur 1,
Figur 5 eine Leinenführung bei einer zweiten Ausführungsform des Tubekites,
Figur 6 eine Leinenführung bei einer dritten Ausführungsform des Tubekites,
Figur 7 eine Leinenführung bei einem vierten Ausführungsform des Tubekites,
Figur 8 eine Alternative des Bereichs Y aus Figur 1,
Figur 9 eine weitere Alternative des Bereichs Y aus Figur 1 und
Figur 10 eine Befestigungsmöglichkeit der Zusatzleine am Kite.

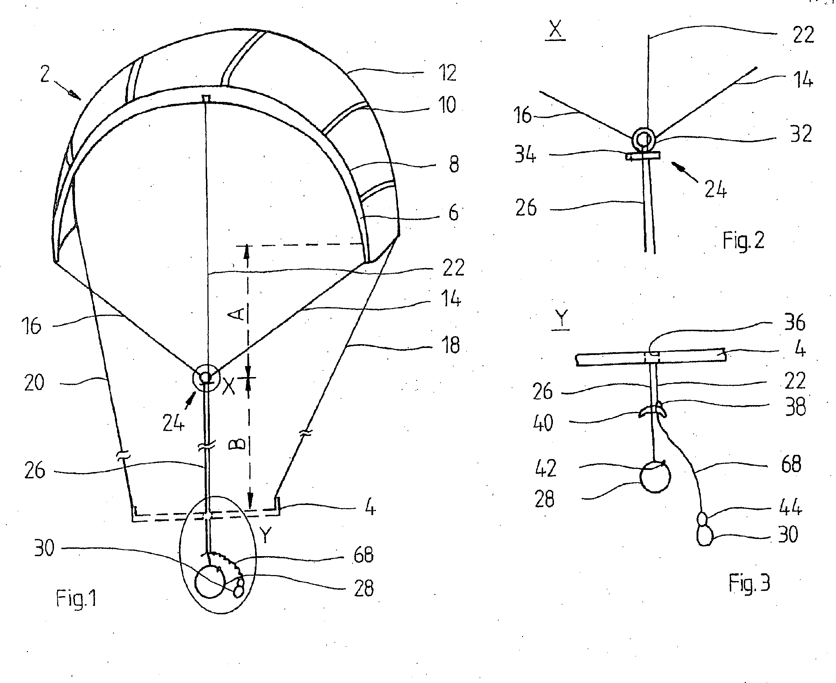

Figur 1 zeigt einen erfindungsgemäßen Tubekite 2 mit einer Bar 4. Der Tubekite 2 hat einen aufblasbaren Schlauch 6 "Tube" im Bereich seiner Anströmkante bzw. Leading Edge 8 und eine Vielzahl von Rippen 10, die sich zu seiner Abströmkante bzw. Trailing Edge 12 erstrecken. Der Tubekite 2 steht über zwei Frontleinen 14, 16, zwei Backleinen 18, 20 und eine erfindungsgemäße Zusatzleine 22 mit einem Surfer in Verbindung.

Die Frontleinen 14, 16 greifen an Endbereichen der Leading Edge 8 an und sind über einen Kupplungsabschnitt 24 (Figur 2) zu einer Zugleine 26 zusammengeführt, die über ein Halteelement 28 "Chicken Loop" am Trapez des Surfers lösbar befestigbar ist. Idealerweise ist der Kupplungsabschnitt 24 näher am Tubekite 2 angeordnet als an der Bar 4. D.h. der in der Figur 1 angedeutete Abstand A ist kleiner als der angedeutete Abstand B.

Die Backleinen 18, 20 bzw. Steuerleinen greifen an Endbereichen der Trailing Edge 12 an und sind an Endabschnitten der Bar 4 befestigt.

Die erfindungsgemäße Zusatzleine 22 greift zwischen den Frontleinen 14, 16 an der Leading Edge 8 an und erstreckt sich über den Kupplungsabschnitt 24 hinaus. Dabei verläuft sie parallel zur Zugleine 26 und ist über eine Verlängerungsleine 68 "Safety Leash" und ein Verbindungselement 30 am Trapez lösbar befestigt (Figur 3).

Figur 2 ist eine vergrößerte Darstellung des Kupplungsabschnitts 24. Der Kupplungsabschnitt 24 hat einen Ring 32, an dem die Frontleinen 14, 16 angreifen und von dem sich die Zugleine 26 erstreckt. Durch den Ring 32 ist die Zusatzleine 22 geführt, die in der Flugphase mit einem Stopper 34 in Anlage mit dem Ring 32 bringbar ist, so dass die Zugkräfte auf die Zugleine 26 übertragbar sind. Unter der Flugphase wird dabei der Zustand vom Start bis zur Landung ohne ein Depowern des Tubekites 2 verstanden. Zum Trimmen der Zusatzleine 22 ist der Stopper 34 einstellbar.

Figur 3 zeigt eine vergrößerte Darstellung des Bereichs Y aus Figur 1. Die Zugleine 26 und die Zusatzleine 22 erstrecken sich durch eine Führung 36 der Bar 4 und sind über das öffnungsbare Halteelement 28 bzw. das öffnungsbare Verbindungselement 30 am Trapez lösbar befestigt. Zur Öffnung des Halteelements 28 bzw. des Verbindungselements 30 sind integrierte Verschlüsse 42, 44 vorgesehen. Zusätzlich zur Führung 36 durch die Bar 4 ist die Zusatzleine 22 über ein Sicherungselement 38 in Form einer Öse an einer Halterung 40, die in dieser Ausführungsform an der Zugleine 26 angeordnet ist, gesichert.

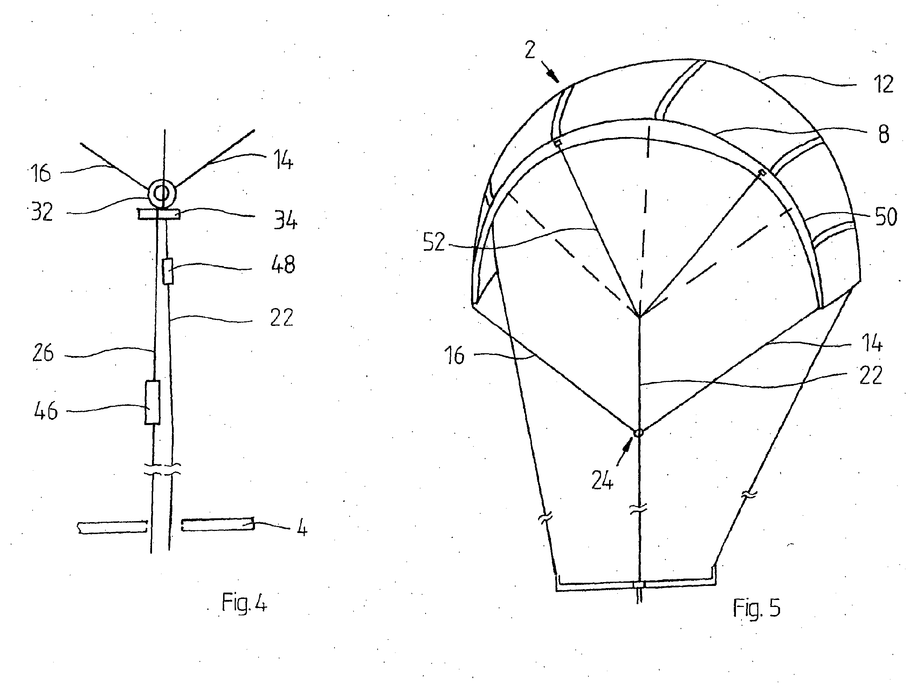

Zum Trimmen der Zugleine 26 kann gemäß Figur 4 an dieser ein Trimmelement 46 vorgesehen sein. Um die Zusatzleine 26 im Bereich zwischen dem Kupplungsabschnitt 24 und der Halterung 40 auf Spannung zu halten, kann der Zusatzleine 22 ein Spannelement 44, beispielsweise ein Gummi, zugeordnet sein. Dadurch wird ein versehentliches Abrutschen der Öse von der Halterung 40 und eine unkontrolliertes "Herumwedeln" der Zusatzleine 22 verhindert, auch wenn die Trimmung der Zugleine 26 verändert wird. Dieses Spannelement kann auch durch eine Klemme realisiert sein, in der der "lose" Teil der Zusatzleine strammgezogen und belegt wird. Die Klemme (beispielsweise eine Kammklemme) ist so ausgelegt, dass sie die Zusatzleine 22 in der Flugphase stramm hält und beim Loslassen der Bar 4 freigibt

Die erfindungsgemäße Zusatzleine 26 hat im wesentlichen drei Vorteile:

Erstens wirkt die Zusatzleine 22 in der Flugphase als dritte Frontleine, wodurch die Geometrie des Tubekites 2 stabilisiert und eine gleichbleibende hohe Performance erzielt wird. Dabei liegt in der Flugphase der Stopper 34 an dem Ring 32 an, so dass die auf die Zusatzleine 22 wirkenden Zugkräfte in die Zugleine 26 eingeleitet werden. Dadurch ist die Zusatzleine 22 in ihrem Bereich von dem Stopper 34 bis zur Halterung 40 im wesentlichen kräftefrei und nur durch das Spannelement 48 vorgespannt.

Zweitens wirkt die Zusatzleine 22 durch die Verlängerung über den Kupplungsabschnitt 24 hinaus zum Surfer als Depowerleine bzw. Sicherungsleine. Durch Einstellen der Spannung oder Länge der Zusatzleine 22 kann der Anstellwinkel des Kites verändert und dessen Performance in Abhängigkeit von der Windstärke optimiert werden. Ein vollständiges Depowern ist immer dann notwendig, wenn der Surfer die Kontrolle über seinen Tubekite 2 verloren hat. In diesem Fall ist es notwendig, den Tubekite 2 zum Wegdrehen zu bringen, so dass der Wind nicht mehr angreifen kann. Zum vollständigen Depowern öffnet der Surfer das Halteelement 28, wodurch die Zugleine 26 und somit die Frontleinen 14, 16 entlastet werden. Der Ring 32 bewegt sich in Richtung Tubekite 2 und die Zusatzleine 26 wird von der Halterung 40 gelöst. Aufgrund der Entlastung der Frontleinen 14, 16 dreht sich der Tubekite 2 aus dem Wind. Durch die Befestigung der Zusatzleine 22 an dem Surfer wird diese "durchgespannt" und ermöglicht somit ein kontrolliertes Wegdrehen des Tubekites 2. "Durchspannen" heißt dabei, dass die Zusatzleine 22 nun über ihre gesamte Länge den Tubekite 2 trägt. Während in der Flugphase, wie vorstehend erläutert, nur der Bereich der Zusatzleine 22 zwischen dem Tubekite 2 und dem Stopper 34 die auf den Tubekite 2 wirkenden Kräfte mitaufnimmt und diese ab dem Stopper 34 in die Zugleine 26 eingeleitet werden, ist nun die Anlageverbindung Ring 32-Stopper 34 aufgehoben und die auf den Tubekite 2 wirkenden Kräfte werden über den Stopper 34 hinaus zum Verbindungselement 30 an den Surfer übertragen.

Zum Nottrennen des Tubekites 2 kann der Verschluss 44 des Verbindungselements 30 geöffnet werden, so dass beim Loslassen der Bar 4 dieser vollständig von dem Surfer gelöst ist.

Drittens kann, zB. bei einem Wasserstart nach einem Depowern, der Tubekite 2 durch Ziehen an der Zusatzleine 22 leicht auf den Rücken, d.h. seine Trailing Edge 12, gelegt werden, und somit in seine optimale Startposition überführt werden. Dabei kann der Surfer solange an der Zusatzleine 22 ziehen und die Geometrie des Tubekites 2 verändern, bis dieser beginnt, sich aus dem Wasser zu erheben. Sobald der Tubekite 2 in die Flugphase übergegangen ist, lässt der Surfer die Zusatzleine los, so dass diese mit ihrem Stopper 34 auf den Ring 32 aufläuft und somit wieder als dritte Frontleine wirkt.

Die Figuren 5, 6 und 7 zeigen weitere Ausführungsformen der Zusatzleine 22 und ihre Befestigung an dem Tubekite 2. Dabei ist bei jeder Ausführungsform der Kupplungsabschnitt 24 vorgesehen, so dass sich die grundsätzliche Funktion der Zusatzleine 22 zur vorbeschriebenen Ausführungsform nicht ändern.

So kann gemäß Figur 5 die Zusatzleine 22 über eine Vielzahl von Zweigleinen 50, 52, die sich in Querrichtung des Tubekites 2 gleichmäßig zwischen den Frontleinen 12, 14 erstrecken, an der Leading Edge 8 angreifen. Vorteilhafterweise sind die Zweigleinen 50, 52 nicht bis zum Kupplungsabschnitt 24 heruntergeführt, sondern sind von diesem beabstandet an der Zusatzleine 22 befestigt.

Die gestrichelt dargestellten Linien entsprechen weiteren Zweigleinen und sollen verdeutlichen, dass die Anzahl der Zweigleinen 50, 52 beliebig variiert werden kann. Dabei ist es ebenfalls vorstellbar, die Zweigleinen 50, 52 bzw. die Zusatzleine 22 nicht an der Leading Edge 8 angreifen zu lassen, sondern auch an Bereichen zwischen der Leading Edge 8 und der Trailing Edge 12.

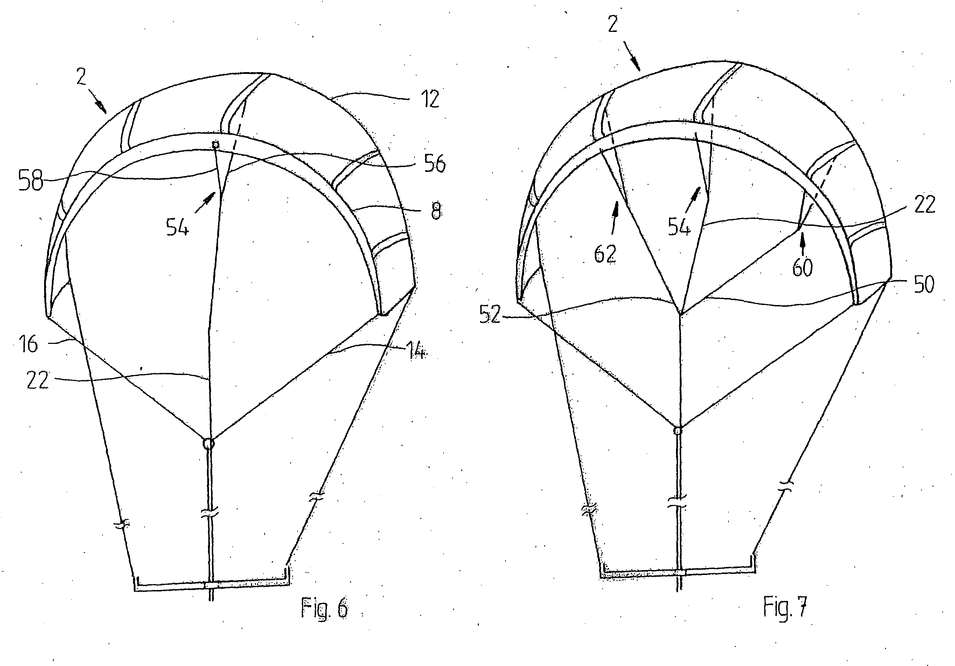

Gemäß Figur 6 kann die Zusatzleine 22 über eine Waage 54 an dem Tubekite 2 zwischen den Frontleinen 14, 16 angreifen. Die Waage 54 hat Waageleinen 56, 58, die an einem Ende der Zusatzleine 22 befestigt sind und in Abströmrichtung, d.h. zwischen der Leading Edge 8 und der Trailing Edge 12, hintereinander an dem Tubekite 2 angreifen.

Gemäß Figur 7 können die Ausführungsformen der Figuren 5 und 6 ebenfalls miteinander kombiniert werden, derart, das die Zusatzleine 22 selber über eine Waage 54 an dem Tubekite 2 befestigt ist und gleichzeitig über Zweigleinen 50, 52 mit Waagen 60, 62 aufgezweigt ist.

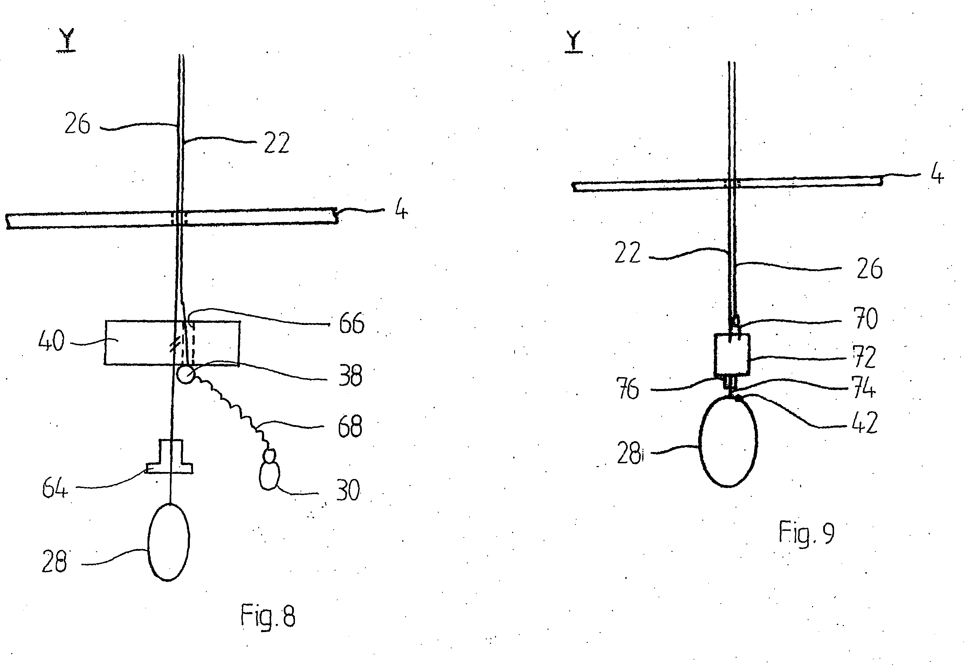

Die Figuren 8 und 9 zeigen alternative Auslösemechanismen der Zugleine 26 und der Zusatzleine 22 im Bereich des Surfers.

Bei der Ausführungsform nach Figur 8 wird das Halteelement 28 der Zugleine 26 über einen Auslösekörper 64 geöffnet. Dieser Auslösekörper 64 ist als festlegbare Schiebehülse auf der Zugleine 26 geführt. Bei einer Verschiebung des Auslösekörpers 64 in Richtung der Halterung 40 für die Zusatzleine 22 wird das Halteelement 28 geöffnet und die Zugleine 26 entlastet, wodurch die Zusatzleine 22 über die lösbare Befestigung an dem Surfer mit der Verlängerungsleine 68 und dem Verbindungselement 30 "durchgespannt" und der Tubekite 2 depowered wird.

Die Halterung 40 ist als Anschlag mit einer Ausnehmung 66, in der die Zusatzleine 22 geführt ist, ausgebildet. Als Sicherungselement 38 ist eine Kugel vorgesehen, deren Außendurchmesser größer ist als der Innendurchmesser der Ausnehmung 66, so dass diese nicht durch die Ausnehmung 66 gezogen werden kann. Über das Spannelement 48 gemäß Figur 4 ist in der Flugphase die Kugel in Anlage mit der Halterung 40 gehalten.

Selbstverständlich kann der Auslösekörper 64 auch als Drehkörper ausgebildet sein.

Figur 9 zeigt eine Ausführungsform, bei der auf die Verlängerungsleine 68 der Zusatzleine 22 verzichtet wird. Die Zugleine 26 ist an einem Bügel 70 eines Entsicherungsteils 72 befestigt, das mit dem Halteelement 28 in Verbindung steht. Das Entsicherungsteil 70 ist unmittelbar oder, wie hier dargestellt, mittelbar über einen Befestigungskörper 74 mit dem Halteelement 28 verbunden. Um eine Verdrehung und damit eine hohe Reibung der Zusatzleine 22 und der Zugleine 26 zu vermeiden, ist zwischen dem Entsicherungsteil 70 und dem Befestigungskörper 74 ein Wirbel 76 "Swifel" angeordnet. Die Zusatzleine 22 ist in das Entsicherungsteil 72 geführt und ebenfalls mit dem Befestigungskörper 74 verbunden.

Bei Betätigung des Entsicherungsteils 72 gleitet dieses entlang der Zusatzleine 22 in Richtung der Bar 4. Folglich wird die Zusatzleine 22 "durchgespannt" und der Tubekite 2 wird depowered. Zum vollständigen Trennen des Tubekites 2 vom Surfer ist in dem Halteelement 28 ein öffnungsbarer Verschluss 42 als Nottrennung angeordnet, über den bei Öffnung ebenfalls die Zusatzleine 22 von dem Surfer gelöst wird.

Anstelle der Verschiebung des Entsicherungsteils 72 ist es ebenfalls vorstellbar, dass bei Betätigung der Bügel 70 öffnet und dadurch die Zugleine 26 entlastet wird.

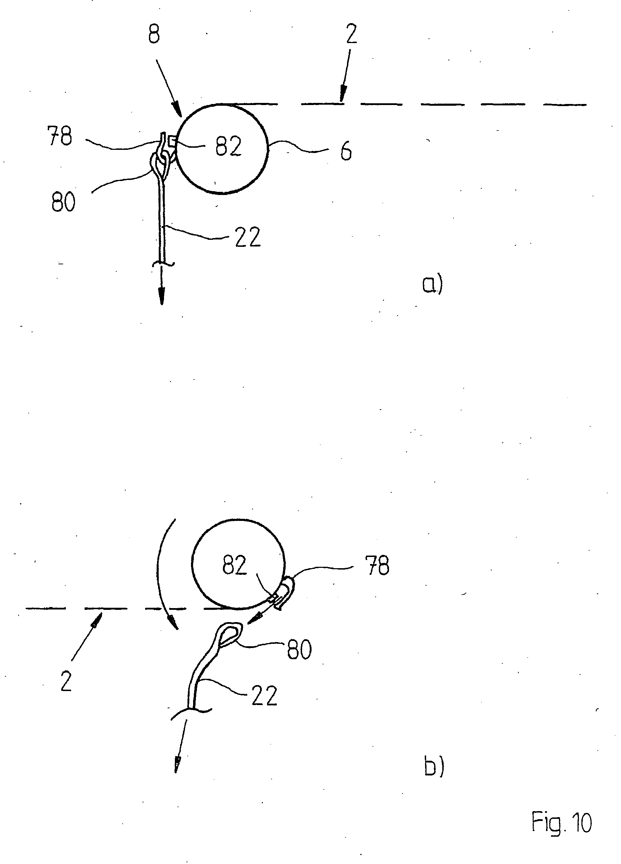

Im Falle eines Absturzes kann es vorkommen, dass sich der Tubekite 2 um seine Querachse, d.h. um die Längsachse der Tube 6 dreht (einrollt), wobei diese Drehung in Zugrichtung der Zusatzleine 22 erfolgt. In den meisten Fällen wird die Zusatzleine 22 bei einem derartigen Einrollen seitlich abrutschen, so dass der Surfer zum Neustart zunächst die Leinen neu ordnen muß. Es kann jedoch vorkommen, dass sich die Zusatzleine um den Kite wickelt und dann bei einem Aufmachen des Tubekites 2 nach einem derartigen Einrollen durch den Peitscheneffekt der dünnen Zusatzleine 22 der Kite beschädigt oder gar zerschnitten wird. Um eine derartige Beschädigung zu vermeiden, wird bei dem in Figur 10 dargestellten Ausführungsbeispiel die Zusatzleine 22 lösbar an dem Schlauch 6 (Tube) befestigt. Diese lösbare Befestigung ist so gewählt, dass die Zusatzleine 22 beim unerwünschten Einrollen des Kites frei kommmt und sich somit nicht um diesen wickeln kann. Der Kite bleibt voll manövrierfähig und der Surfer kann zurück zum Strand fahren um die Zusatzleine 22 einzuhängen.

Gemäß Figur 10a kann die Aufhängung der Zusatzleine 22 über einen Haken 78 erfolgen, der am Schlauch 6 befestigt ist. In diesen Haken 78 wird eine Schlaufe 80 der Zusatzleine eingehängt. Der Haken 78 ist mit einem Rückhalteelement 82, beispielsweise einem elastischen Noppen versehen, das so ausgebildet ist, dass die Schlaufe 80 durch elastische Verformung des Rückhalteelements 82 in den Haken 78 einhängbar ist und das zum Lösen eine gewisse Vorspannung des Rückhalteelements 82 überwunden werden muß. Diese Lösekraft ist so eingestellt, dass sich im normalen Betrieb (Flugphase, Starten, "gesteuerter" Absturz) die Zusatzleine 22 nicht vom Haken 78 lösen kann. Kommt es jedoch zu dem in Figur 10b angedeuteten Einrollen, bei dem sich der Tubekite 2 in Pfeilrichtung gegenüber der Normalposition der Figur 10a dreht, so ist die auf die Zugleine 22 wirkende Zugkraft und das auf den Tubekite wirkende Drehmoment groß genug, um die Rückhaltekraft des Rückhalteelements 82 zu überwinden und die Zusatzleine 22 aus dem Haken 78 herauszuziehen, so dass die Zusatzleine 22 lose kommt.

Selbstverständlich kann anstelle des mit einem elastischen Rückhalteelements 82 versehenen Haken 78 auch eine andere geeignete lösbare Verbindung eingesetzt werden.

Die Anmelderin behält sich vor, auf die lösbare Anbindung einer fünften Leine (reine Sicherheitsleine oder Zusatzleine im Sinne der Erfindung) an den Kite eine Teilanmeldung zu richten.

Offenbart ist ein Tubekite mit zwei Frontleinen, die zu einer Zugleine zusammengeführt sind, und am Surfer lösbar befestigbar sind, und mit zwei Backleinen, die an einer Bar befestigbar sind, wobei eine Zusatzleine vorgesehen ist, die in der Flugphase als zusätzliche Frontleine wirkt.

### Bezugszeichenliste

- 2: Tubekite
- 4: Bar
- 6: Schlauch
- 8: Leading Edge
- 10: Rippe
- 12: Trailing Edge
- 14: Frontleine
- 16: Frontleine
- 18: Backleine
- 20: Backleine
- 22: Zusatzleine
- 24: Kupplungsabschnitt
- 26: Zugleine
- 28: Halteelement
- 30: Verbindungselement
- 32: Ring
- 34: Stopper
- 36: Führung
- 38: Sicherungselement
- 40: Halterung
- 42: Verschluss
- 44: Verschluss
- 46: Trimmelement
- 48: Spannelement
- 50: Zweigleine
- 52: Zweigleine
- 54: Waage
- 56: Waageleine
- 58: Waageleine
- 60: Waage
- 62: Waage
- 64: Auslösekörper
- 66: Ausnehmung
- 68: Verlängerungsleine
- 70: Bügel
- 72: Entsicherungsteil
- 74: Befestigungskörper
- 76: Wirbel
- 78: Haken
- 80: Schlaufe
- 82: Rückhalteelement

## Patentansprüche

1. Tubekite zum Kite-Surfen mit zwei Frontleinen (14, 16),die in einem Kupplungsabschnitt (24) zu einer Zugleine (26) zusammengeführt und am Surfer lösbar befestigbar sind, mit einer Trimmeinrichtung (46) zur Einstellung der Zugleinlänge, mit zwei Backleinen (18, 20), die an einer Bar (4) befestigbar sind, und mit mindestens einer Zusatzleine (22), die am Tubekite (2) angreift, wobei die Zusatzleine (22) als zusätzliche Zugleine ausgebildet ist und in einer Flugphase auf die Zusatzleine (22) Zugkräfte wirken, so dass die Zusatzleine (22) zusätzlich zu den Frontleinen (14, 16) und den Backleinen (18, 20) in der Flugphase die Geometrie des Tubekites (2) stabilisiert, **dadurch gekennzeichnet, dass** die Zusatzleine (22) im Bereich zwischen der Zusammenführung der Frontleinen (14,16) und oberhalb der Bar (4) und der Trimmeinrichtung (46) an der Zugleine angreift.

2. Tubekite nach Anspruch 1, wobei die Zusatzleine (22) zwischen den Frontleinen (14, 16) an einer Leading Edge (8) angreift.

3. Tubekite nach Anspruch 1, wobei sich die Zusatzleine (22) verzweigt und über Zweigleinen (50, 52) an dem Tubekite (2), vorzugsweise an der Leading Edge (8), angreift.

4. Tubekite nach Anspruch 2 oder 3, wobei die Zusatzleine (22) oder die Zweigleinen (50, 52) über Waagen (54, 60, 62) an dem Tubekite (2) angreifen.

5. Tubekite nach Anspruch 1, wobei der Kupplungsabschnitt (24) näher zum Tubekite (2) als zur Bar (4) angeordnet ist.

6. Tubekite nach Anspruch 1 oder 5, wobei die Zusammenführung im Bereich zwischen 5 Meter unter dem Kite und 3m oberhalb der Bar (4) liegt.

7. Tubekite nach einem der Ansprüche 1 bis 6, wobei die Frontleinen (14, 16) an einem Ring (32) des Kupplungsabschnittes (24) befestigt sind, von dem sich die Zugleine (26) erstreckt, wobei die Zusatzleine (26) einen Stopper (34) hat, der in der Flugphase in Anlage mit dem Ring (32) bringbar ist.

8. Tubekite nach Anspruch 7, wobei der Stopper (34) einstellbar ist.

9. Tubekite nach Anspruch 1 bis 8, wobei die Zusatzleine (22) über den Kupplungsabschnitt (24) in Richtung der Bar (4) verlängert ist.

10. Tubekite nach einem der vorhergenden Ansprüche, wobei die Zugleine (26) und die Zusatzleine (22) durch eine Führung (36) der Bar (4) geführt sind.

11. Tubekite nach Anspruch 10, wobei die Zugleine an einem öffnungsbaren Halteelement (28) an einem Trapez des Surfers befestigt ist, wobei eine Halterung (40) vorgesehen ist, an der die Zusatzleine (22) sicherbar ist.

12. Tubekite nach Anspruch 11, wobei die Zusatzleine (22) über die Halterung (40) hinaus verlängert und lösbar am Trapez befestigbar ist.

13. Tubekite nach Anspruch 11 oder 12, wobei zwischen der Halterung (40) und dem Halteelement (28) an der Zusatzleine (22) ein Auslösekörper (64) angeordnet ist, der bei Betätigung das Halteelement (28) öffnet.

14. Tubekite nach Anspruch 11, 12 oder 13, wobei die Zusatzleine (22) von der Halterung (40) zum Trapez geführt ist, und an diesem lösbar befestigt ist.

15. Tubekite nach einem der auf Anspruch 11 zurückbezogenen Ansprüche, wobei die Zugleine (26) über ein an der Zusatzleine (22) geführtes Entsicherungsteil (72) an dem Halteelement (28) entsicherbar befestigt ist.

16. Tubekite nach einem der Ansprüche 1 bis 15, wobei zwischen dem Kupplungsabschnitt (24) und dem Surfer ein Spannelement (48) zum Spannen der Zusatzleine (22) vorgesehen ist.

17. Tubekite nach einem der vorhergehenden Ansprüche, wobei ein Trimmelement (46) zum Trimmen der Zugleine (26) vorgesehen ist.

18. Tubekite nach einem der vorhergehenden Ansprüche, wobei die Zusatzleine (22) derart lösbar an der Leading Edge (8) des Tubekites (2) befestigt ist, dass sie sich bei dessen ungewollter Drehung löst.

## Claims

1. A tube kite for kite-surfing, comprising two front lines (14, 16) which are combined, in a coupling portion (24), into a tug line (26) and adapted to be releasably secured to the surfer, trimming means (46) for adjusting the tug line length, two back lines (18, 20) adapted to be secured to a bar (4), and at least one supplementary line (22) which attacks at the tube kite (2), wherein the supplementary line (22) has the form of an additional tug line and tensile forces act on the supplementary line (22) in a flight phase such that the supplementary line (22) in addition to the front lines (14, 16) and the back lines (18, 20) stabilizes the geometry of the tube kite (2) in the flight phase, **characterized in that** the supplementary line (22) attacks at the tug line in the range between the combination of the front lines (14, 16) and above the bar (4) and the trimming means (46).

2. The tube kite in accordance with claim 1, wherein the supplementary line (22) attacks between the front lines (14, 16) at a leading edge (8).

3. The tube kite in accordance with claim 1, wherein the supplementary line (22) branches and attacks at the tube kite (2), preferably at the leading edge (8), through branch lines (50, 52).

4. The tube kite in accordance with claim 2 or 3, wherein the supplementary line (22) or the branch lines (50, 52) attack at the tube kite (2) through bridles (54, 60, 62).

5. The tube kite in accordance with claim 1, wherein the coupling portion (24) is arranged closer to the tube kite (2) than to the bar (4).

6. The tube kite in accordance with claim 1 or 5, wherein the combination is located in the range between 5 m below the kite and 3 m above the bar (4).

7. The tube kite in accordance with any one of claims 1 to 6, wherein the front lines (14, 16) are secured to a ring (32) of the coupling portion (24) from which the tug line (26) extends, the supplementary line (26) having a stopper (34) which is adapted to be taken into contact with the ring (32) in the flight phase.

8. The tube kite in accordance with claim 7, wherein the stopper (34) is adjustable.

9. The tube kite in accordance with claim 1 to 8, wherein the supplementary line (22) is prolonged beyond the coupling portion (24) in a direction towards the bar (4).

10. The tube kite in accordance with any one of the preceding claims, wherein the tug line (26) and the supplementary line (22) are taken through a guide member (36) of the bar (4).

11. The tube kite in accordance with claim 10, wherein the tug line is secured to an openable retaining element (28) on a trapeze of the surfer, wherein a mount (40) is provided to which the supplementary line (22) may be secured.

12. The tube kite in accordance with claim 11, wherein the supplementary line (22) is prolonged beyond the mount (40) and adapted to be releasably secured to the trapeze.

13. The tube kite in accordance with claim 11 or 12, wherein a triggering member (64) which opens the retaining element (28) upon actuation is arranged between the mount (40) and the retaining element (28) on the supplementary line (22).

14. The tube kite in accordance with claim 11, 12 or 13, wherein the supplementary line (22) leads from the mount (40) to the trapeze and is adapted to be releasably secured to the latter.

15. The tube kite in accordance with any one of the claims appended to claim 11, wherein the tug line (26) is adapted to be releasably secured to the retaining element (28) through the intermediary of a release member (72) guided on the supplementary line (22).

16. The tube kite in accordance with any one of claims 1 to 15, wherein a tightening element (48) for tightening the supplementary line (22) is provided between the coupling portion (24) and the surfer.

17. The tube kite in accordance with any one of the preceding claims, wherein a trimming element (46) for trimming the tug line (26) is provided.

18. The tube kite in accordance with any one of the preceding claims, wherein the supplementary line (22) is releasably secured to the leading edge (8) of the tube kite (2) such as to release in the event of an inadvertent rotation of the latter.

## Revendications

1. Cerf-volant tubulaire destiné au kite surf comprenant deux cordes frontales (14, 16), qui sont réunies dans une section de couplage (24) pour former une corde de traction (26) et qui peuvent être fixées de manière amovible au surfeur, avec un système d'équilibrage (46) destiné à régler la longueur de la corde de traction, avec deux cordes arrière (18, 20), qui peuvent être fixées à une barre (4), et comprenant au moins une corde additionnelle (22), qui est reliée au cerf-volant tubulaire (2), dans lequel la corde additionnelle (22) est conçue comme une corde de traction additionnelle et des forces de traction agissent sur la corde additionnelle (22) en phase de vol, de sorte que la corde additionnelle (22), en plus des cordes frontales (14, 16) et des cordes arrière (18, 20), stabilise en phase de vol la géométrie du cerf-volant tubulaire (2) **caractérisé en ce que** la corde additionnelle (22) est reliée à la corde de traction dans la zone comprise entre la jonction des cordes frontales (14,16) et au-dessus de la barre (4) et du système d'équilibrage (46).

2. Cerf-volant tubulaire selon la revendication 1, dans lequel la corde additionnelle (22) entre les cordes frontales (14, 16) est reliée à un bord avant (8).

3. Cerf-volant tubulaire selon la revendication 1, dans lequel la corde additionnelle (22) se ramifie et est reliée par l'intermédiaire des cordes ramifiées (50, 52) au cerf-volant, tubulaire (2), de préférence au bord avant (8).

4. Cerf-volant tubulaire selon la revendication 2 ou 3, dans lequel la corde additionnelle (22) ou les cordes ramifiées (50, 52) sont reliée(s) par l'intermédiaire de contre-lames (54, 60, 62) au cerf-volant tubulaire (2).

5. Cerf-volant tubulaire selon la revendication 1, dans lequel la section de couplage (24) est disposée en étant plus proche du cerf-volant tubulaire (2) que de la barre (4).

6. Cerf-volant tubulaire selon la revendication 1 ou 5, dans lequel la jonction se situe dans la plage comprise entre 5 mètres au-dessous du cerf-volant tubulaire et 3 m au-dessus de la barre (4).

7. Cerf-volant tubulaire selon l'une quelconque des revendications 1 à 6, dans lequel les cordes frontales (14, 16) sont fixées à un anneau (32) de la section de couplage (24), d'où s'étend la corde de traction (26), la corde additionnelle (26) présentant une butée (34) qui, en phase de vol, peut être amenée en appui avec l'anneau (32).

8. Cerf-volant tubulaire selon la revendication 7, dans lequel la butée (34) est réglable.

9. Cerf-volant tubulaire selon la revendication 1 à 8, dans lequel la corde additionnelle (22) est prolongée au-dessus de la section de couplage (24) en direction de la barre (4).

10. Cerf-volant tubulaire selon l'une quelconque des revendications précédentes, dans lequel la corde de traction (26) et la corde additionnelle (22) sont guidées par un guidage (36) de la barre (4).

11. Cerf-volant selon la revendication 10, dans lequel la corde de traction est fixée, au niveau d'un élément de retenue ouvrable (28), à un trapèze du surfeur, une fixation (40) étant prévue, dans laquelle la corde additionnelle (22) peut être bloquée.

12. Cerf-volant tubulaire selon la revendication 11, dans lequel la corde additionnelle (22) se prolonge au-delà de la fixation (40) et peut être fixée au trapèze de manière amovible.

13. Cerf-volant tubulaire selon la revendication 11 ou 12, dans laquelle un corps de déclenchement (64) est disposé entre la fixation (40) et l'élément de retenue (28) sur la corde additionnelle (22), lequel corps ouvre l'élément de retenue (28) lorsqu'il est actionné.

14. Cerf-volant tubulaire selon la revendication 11, 12 ou 13, dans lequel la corde additionnelle (22) est guidée de la fixation (40) au trapèze, et est fixée à celui-ci de manière amovible.

15. Cerf-volant tubulaire selon l'une quelconque des revendications liées à la revendication 11, dans lequel la corde de traction (26) est fixée de manière déblocable à l'élément de retenue (28) par l'intermédiaire d'une pièce de déblocage (72) guidée sur la corde additionnelle (22).

16. Cerf-volant tubulaire selon l'une quelconque des revendications 1 à 15, dans lequel un élément de serrage (48) destiné à serrer la corde additionnelle (22) est prévu entre la section de couplage (24) et le surfeur.

17. Cerf-volant tubulaire selon l'une quelconque des revendications précédentes, dans lequel un élément d'équilibrage (46) est prévu pour équilibrer la corde additionnelle (26).

18. Cerf-volant tubulaire selon l'une quelconque des revendications précédentes, dans lequel la corde additionnelle (22) est fixée de manière amovible au bord avant (8) du cerf-volant tubulaire (2), de telle sorte qu'elle se détache lorsque celui-ci est amené involontairement en rotation.
